(19) Europäisches Patentamt
European Patent Office
Office européen des brevets

(11) EP 1 127 080 B1

(12) EUROPÄISCHE PATENTSCHRIFT

(45) Veröffentlichungstag und Bekanntmachung des Hinweises auf die Patenterteilung:
**23.03.2005 Patentblatt 2005/12**

(21) Anmeldenummer: **99955946.1**

(22) Anmeldetag: **02.11.1999**

(51) Int Cl.⁷: **C08F 8/42**, C08G 81/02, C08G 85/00

(86) Internationale Anmeldenummer:
**PCT/EP1999/008370**

(87) Internationale Veröffentlichungsnummer:
**WO 2000/026263 (11.05.2000 Gazette 2000/19)**

# (54) REDISPERGIERBARES MATERIAL, VERFAHREN ZU DESSEN HERSTELLUNG UND DESSEN VERWENDUNG SOWIE EIN WÄSSRIGES SYSTEM, ENTHALTEND DAS REDISPERGIERBARE MATERIAL

REDISPERSIBLE MATERIAL, METHOD FOR PRODUCING AND USING THE SAME, AND AQUEOUS SYSTEM CONTAINING THIS REDISPERSIBLE MATERIAL

MATERIAU REDISPERSIBLE, PROCEDE PERMETTANT DE LE PRODUIRE ET DE L'UTILISER ET SYSTEME AQUEUX CONTENANT LE MATERIAU REDISPERSIBLE

(84) Benannte Vertragsstaaten:
**AT BE CH CY DE DK ES FI FR GB GR IE IT LI LU MC NL PT SE**

(30) Priorität: **03.11.1998 DE 19850658**

(43) Veröffentlichungstag der Anmeldung:
**29.08.2001 Patentblatt 2001/35**

(73) Patentinhaber: **Elotex AG**
**6203 Sempach Station (CH)**

(72) Erfinder: **KOELLIKER, Robert**
**CH-6208 Oberkirch (CH)**

(74) Vertreter:
**Hagemann, Heinrich, Dr.rer.nat., Dipl.-Chem. et al**
**Meissner, Bolte & Partner**
**Postfach 86 03 29**
**81630 München (DE)**

(56) Entgegenhaltungen:
**EP-A- 0 187 040**
**EP-A- 0 203 391**
**EP-A- 0 212 125**
**EP-A- 0 449 413**
**EP-A- 0 818 496**
**WO-A-85/04891**
**DE-A- 4 402 408**
**GB-A- 2 192 891**
**US-A- 4 618 650**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein redispergierbares Material, insbesondere in Pulverform, ein Verfahren zu dessen Herstellung und dessen Verwendung sowie ein wäßriges System, enthaltend das redispergierbare Material.

Es ist im Stand der Technik bekannt, wäßrige Polymerisatdispersionen (Latices), die selbst keine thermodynamisch stabilen Systeme darstellen, durch Dispergiermittel, wie Schutzkolloide oder Emulgatoren, zu stabilisieren. Neben den stabilisierten, wäßrigen Polymerisatdispersionen sind auch durch Trocknung zugängliche Pulver von Interesse, die aufgrund ihrer Eigenschaften, wie leichte Handhabung, einfache Lagerung und Transport sowie einfache Dosierbarkeit, wachsende Bedeutung erlangen.

Derartige Systeme können durch zielgerichtete Auswahl funktioneller Gruppen, die zu diesem Zweck in die eingesetzten Polymerisate eingeführt werden können, den erforderlichen Endanwendungen angepaßt werden. Es ist eine Vielzahl derartiger funktioneller Gruppen bekannt. Insbesondere gewinnen siliciumorganische Gruppen enthaltende Polymerzusammensetzungen aufgrund ihrer Reaktionen an Bedeutung. Beispielsweise beschreibt die EP 0 187 040 A2 ein modifiziertes Polyolefin, das ein Silan oder ein Alkoxysilan in copolymerisierter, gepfropfter oder chemisch gebundener Form enthält, welches wiederum an Polyvinylalkohol gebunden ist. Das modifizierte Polyolefin wird in Mehrschichtfolien und als Emulgatorpolymer in Polymermischungen eingesetzt. Ein ähnliches Produkt beschreibt die WO 85/04891, d.h. einen modifizierten Alkohol in Form eines NAD-Stabilisators (non aqueous dispersent, in der Regel ein Polyol, das ungesättigte Gruppen enthält, und zur Stabilisierung eines weiteren Polymers dient, indem es sterisch dessen Agglomeration verhindert), wobei dieser Alkohol aus der Umsetzung eines Alkohols mit einer olefinisch ungesättigten siliciumhaltigen Verbindung hervorgeht. Es werden demnach mit dem Silan Si-O-C-Bindungen gebildet, die nicht reversibel lösbar sind. Die Silane werden daher ausschließlich als Kopplungsmittel verwendet, die Eigenschaften freier Silangruppen spielen keine Rolle. Eine Herstellung von redispergierbaren Pulvern mit den beschriebenen Polymeren ist nicht möglich und auch nicht beabsichtigt.

Redispergierbare Pulver auf Basis von Siliciumgruppen enthaltenden Polymeren sind im Stand der Technik ebenfalls bekannt. Beispielsweise offenbart die EP 754 737 B Beschichtungszusammensetzungen, basierend auf einem redispergierbaren Pulver, das wasserlösliches Polymer und Organosiliciumverbindungen mit einer bestimmten Viskosität und einem speziellen Molekulargewicht enthält. Die Beschichtungszusammensetzung findet auf Metall, Holz, Kunststoffe sowie mineralische Substrate, wie Zementbeton, natürlichem Stein, Kalksandstein und dergleichen, Verwendung. Die DE 195 26 759 betrifft in Wasser redispergierbare vernetzbare Pulver, basierend auf ethylenisch ungesättigten Monomeren, wie Vinylestern mit 1 bis 18 Kohlenstoffatomen, gegebenenfalls verzweigten Alkylcarbonsäuren, (Meth)Acrylestern mit 1 bis 18 Kohlenstoffatomen, gegebenenfalls verzweigten Alkoholen, Olefinen, Dienen, Vinylaromaten und/oder Vinylhalogeniden sowie 0,05 bis 15,0 Gew.-% einer oder mehrerer ungesättigter Siliciumverbindungen, bezogen auf die gesamte Monomermischung.

Nach der Offenbarung der EP 0 228 657 B1 werden redispergierbare, mindestens eine organische Siliciumverbindung enthaltende Pulver bereitgestellt, enthaltend mindestens 30 Gew.-% organische Siliciumverbindung, wobei mindestens 50 Gew.-% einen Siedepunkt von mindestens 150°C bei 1020 hPa, durchschnittlich höchstens 1,8 SiC-gebundene organische Reste je Siliciumatom und je Molekül mindestens eine Si-H-, Si-OH- oder mindestens eine Si-O-R-Gruppe besitzen, wobei R durch eine Alkoxygruppe substituiert sein kann, sowie 5 bis 50 Gew.-% wasserlösliche Polmere, bezogen auf das Gesamtgewicht der organischen Siliciumverbindung. Die Herstellung der Pulver erfolgt durch Sprühtrocknen in bekannter Weise. Vor dem Versprühen können weitere Zusatzstoffe zugegeben werden, wie Lösungsmittel, Emulgatoren, Antischaummittel, Farbstoffe, Pigmente, Füllstoffe und dergleichen. Eine reversible Umsetzung mit den siliciumhaltigen Gruppen ist nicht beschrieben.

Ferner beschreibt die WO 95/20626 in Wasser redispergierbare Dispersionspulverzusammensetzungen auf der Basis von wasserunlöslichen Polymeren und einer oder mehreren Organosiliciumverbindungen. Die Herstellung erfolgt durch Emulsionspolymerisation von einem oder mehreren Monomeren in Gegenwart einer oder mehrerer in Wasser dispergierbarer Organosiliciumverbindungen und Sprühtrocknen der erhaltenen Produkte, gegebenenfalls vor oder nach der Zugabe von Zusatzstoffen, wie Schutzkolloiden und Antiblockmitteln. Als geeignete Schutzkolloide werden Polyvinylalkohole, deren Derivate, Polysaccharide in wasserlöslicher Form, wie Stärke, Cellulose, Proteine, synthetische Polymere und dergleichen, als Antiblockmittel Calcium- bzw. Magnesiumcarbonat, Talk, Gips, Kieselsäure und Silikate aufgeführt. Das Schutzkolloid in Form von Polyvinylalkohol wird nur optional zugesetzt. Ferner kann das Sprühtrocknen alternativ vor oder nach Zugabe des Polyvinylalkohols erfolgen, wobei der Polyvinylalkohol ausschließlich die Funktion eines Schutzkolloids erfüllt. Die Voraussetzungen einer Umsetzung der siliciumhaltigen Gruppe mit dem Polyvinylalkohol unter Bildung einer reversibel lösbaren Bindung liegen nicht vor, und dies ist auch nicht beabsichtigt.

Die Druckschrift WO 95/20627 der Wacker-Chemie GmbH mit demselben Anmeldetag wie die WO 95/20626 beschreibt im wesentlichen dieselben redispergiebaren Pulver. Jedoch werden die wäßrige Organopolymerdispersion und die wäßrige Dispersion der Siliciumverbindung entweder gemeinsam versprüht und getrocknet oder getrennt versprüht und gemeinsam getrocknet. Auch hier können vor dem Versprühen und Trocknen gegebenenfalls Hilfsstoffe

zugesetzt werden.

Bekanntermaßen sollen in den oben beschriebenen siliciumorganischen Polymeren, ob als redispergierbare Pulver oder in einer anderen Darreichungsform, die vorhandenen Siliciumgruppen mit anorganischen Substraten, wie Glas, Holz, Sand, zementhaltigen Materialien oder ähnlichen Substraten, reagieren. Copolymerisierbare Oxysilane, wie sie typischerweise in einem Polymer vorliegen, hydrolysieren unter üblichen Reaktionsbedingungen innerhalb von Minuten zu den reaktiven Silanolen. Dies gibt die nachfolgende Raktionsgleichung (1) wieder:

$$\text{Polymer-Si-OR+}H_2O \rightarrow \text{Polymer-Si-OH +ROH} \qquad (1)$$

Da anorganische $SiO_2$ enthaltende Materialien, wie Zement, Mörtel und auch Glas, in einem gewissen Umfang latente Si-OH-Gruppen besitzen, können Silan-modifizierte Latices kovalente, irreversible Bindungen zum anorganischen Material ausbilden. Hierdurch werden verbesserte Eigenschaften hinsichtlich der Adhäsion oder Flexibilität, d. h. des Abbindeverhaltens und der Verarbeitbarkeit der Endprodukte erzielt. Derartige Umsetzung eines Silanolgruppen enthaltenen Polymers mit einer anorganischen Matrix, die latente Si-OH-Gruppen aufweist, gibt nachfolgende Reaktionsgleichung (2) wieder:

$$\text{Polymer-Si-OH + HO-Si-Matrix} \rightarrow \text{Polymer-Si-O-Si-Matrix + }H_2O \qquad (2)$$

Aus der obigen Reaktionsgleichung (2) ergibt sich unmittelbar, daß auch die Silanolgruppen enthaltenden Polymere im wäßrigen System miteinander reagieren und unter Wasserabspaltung folgende Reaktionsgleichung (3) auftritt:

$$\text{Polymer-Si-OH+HO-Si-Polymer} \rightarrow \text{Polymer-Si-O-Si-Polymer + }H_2O \qquad (3)$$

Diese Reaktion (3) stellt eine unerwünschte Nebenreaktion der Silanolgruppen dar, die mit der beabsichtigten Umsetzung nach der obigen Reaktionsgleichung (2) in Konkurrenz tritt. Es werden keine lösbaren Bindungen gebildet, wodurch die enthaltenen Silanolgruppen ihre Aktivität verlieren und für die eigentliche Umsetzung nicht mehr zur Verfügung stehen. Demzufolge werden die Polymerpartikel durch Ausbildung von Si-O-Si-Bindungen irreversibel vernetzt. Um einer derartigen Umsetzung vorzubeugen, d.h. eine irreversible Bindungsbildung zu verhindern, werden im Stand der Technik entweder keine Si-OH-Gruppen im Polymermaterial eingesetzt oder es werden gezielt Verbindungen ausgewählt, die derartige Reaktionen nicht eingehen können und somit unter den Reaktionsbedingungen hydrolysestabil sind. Solche siliciumgruppenhaltigen Polymere zeigen jedoch für die Endanwendungen eine zumeist wesentlich verringerte Reaktivität (vgl. Reaktionsgleichung (2)), wodurch aggressivere Reaktionsbedingungen notwendig sind oder die gewünschten Kopplungsreaktionen der Silanole mit den Matrixmaterialien, wie mit zementhaltigen Produkten und dergleichen, nur in unzureichendem Maße eintreten.

Dies spielt um so mehr bei der Überführung der Polymermaterialien in redispergierbare Pulver eine Rolle, wo die oben beschriebene Nebenreaktion (Reaktionsgleichung (3)) bei der Herstellung der redispergierbaren Pulver durch Entfernen des Wassers, beispielsweise durch Sprühtrocknen, zur Hauptreaktion wird.

Der Erfindung liegt somit die Aufgabe zugrunde, Silanolfunktionalitäten enthaltende Polymere zur Verfügung zu stellen, wobei die Silanolgruppen in wäßrigen Systemen durch Ausbildung irreversibler Bindungen nicht desaktiviert werden sollen und somit vorteilhafte oder in Einzelfällen verbesserte Eigenschaften in ihren Endanwendungen, wie beispielsweise in kunststoffhaltigen zementgebundenen Systemen, zeigen und aufgrund von wünschenswerten Folgereaktionen zu verbesserten Anwendungsprodukten rühren. Auch soll eine hohe Konzentration von derartigen Silanolgruppen im Polymer möglich sein. Ferner sollen aus dem silanolgruppenhaltigen Polymeren sowohl wäßrige Dispersionen als auch redispergierbare Pulver gewinnbar sein, ohne daß eine Desaktivierung nach dem Redispergieren erfolgt. Darüber hinaus soll die Auswahl der polymeren Ausgangsmaterialien flexibel gestaltbar sein.

Erfindungsgemäß wird obige Aufgabe gelöst durch ein redispergierbares Material, insbesondere in Pulverform, das ein Silanolgruppen enthaltendes Polymer umfaßt, , worin 50-100% der Silanolgruppen mit einer Schutzgruppe versehen sind und die Schutzgruppe eine hydroxy gruppenhaltige Verbindung in Form eines Polyols darstellt, die unter alkalischen Bedingungen abspaltbar ist.

Demzufolge wird durch Schützen der in einem Polymer enthaltenen Silanolgruppen eine vorzeitige Desaktivierung durch irreversible Bindungsbildung unterbunden. Die Schutzgruppe blockiert die aktiven Zentren in Form der Silanolgruppen vorübergehend gegen den Angriff von Reagenzien, wie beispielsweise weiterer Silanolgruppen, so daß Reaktionen wie Oxidation, Reduktion, Substitution, Kondensation und dergleichen nicht stattfinden können. Man

bezeichnet derartige durch eine Schutzgruppe vorübergehend reaktionsunfähig gemachten funktionellen Gruppen auch als sogenannte "latente" Gruppen.

Erfindungsgemäß ist das Polymer nicht besonders beschränkt, so lange es Silanolgruppen besitzt. Unter den Begriff "Polymer" fallen Homopolymere, Copolymere, Blockpolymere oder Pfropfpolymere und auch Oligomere. Für den Fachmann ist ersichtlich, daß zahlreiche (co)polymerisierbare Ausgangsmonomeren die Voraussetzungen zur Herstellung für diese Polymere erfüllen können. Beispielhaft seien genannt Vinylester-Homo- oder Copolymere, (Meth) Acrylsäureester-Homo- oder Copolymere, Homo- oder Copolymere von Dienen, Vinylaromaten, Vinylhalogenverbindungen, Fumar- und/oder Maleinsäurederivaten sowie Polyadditions- und Polykondensationspolymere, wie Polyurethane, Polyester, Polyether, Polyamide, Epoxidharze, Melaminformaldehydharze, Phenolformaldehydharze und dergleichen. Diese Aufzählung erhebt keinen Anspruch auf Vollständigkeit und insbesondere keine Einschränkung in ihrer Auswahl. Vielmehr sind dem Fachmann ohne weiteres andere Monomere/Polymere ersichtlich, die in Frage kommen können. Das Polymer kann jeder beliebige Latex oder auch ein Lösungspolymer sein.

Eine einsetzbare Schutzgruppe muß selektiv und in möglichst einfacher Art und Weise durch Umsetzen mit den Silanolgruppen einführbar und danach wieder entfernbar sein. Es kann dies jede chemische Gruppe sein, die reversibel mit der Silanolgruppe reagiert. Bei der Schutzgruppe handelt es sich um eine hydroxygruppenhaltige Verbindung in Form eines Polyols. Die einsetzbaren Polyole sind im Rahmen der Erfindung nicht besonders beschränkt. Der Begriff "Polyol" soll hier insbesondere einen mehrwertigen Alkohol umfassen, d.h. eine beliebige organische Verbindung, die mindestens zwei alkoholische Hydroxygruppen im Molekül enthält. Hierunter fallen beispielsweise Diole, wie 1,5-Pentandiol, 2-Methyl-1,4-butandiol, 2,2-Dimethyl-1,3-propandiol, 2,5-Dimethyl-3-hexin-2,5-diol, 1,10-Decandiol, 2,2-Bis-(4-hydroxycyclohexyl)-propan, 1,6-Hexandiol, Glykole, wie Glykol, Neopentylglykol, Polyethylenglykol oder Polyetherglykol, Triole, wie 1,2,4-Butantriol, Trimethylolpropan, Trimethylolethan, Glycerin oder auch vierwertige Alkohole (Tetrite), wie Threit, Erythrit, Mesoerythrit und auch Pentaerythrit (Tetramethylolethan). Selbstverständlich kann es sich bei den erfindungsgemäß eingesetzten Polyolen auch um sogenannte Zuckeralkohole handeln, d.h. durch Reduktion der Carbonylfunktion entstandene Polyhydroxyverbindungen, die zwar selbst keine Zucker sind, aber doch süß schmecken. Beispielsweise seien genannt Pentite, wie Arabit, Adonit oder Xylit, Hexite, wie Sorbit, Inosit, Mannit oder Dulcit (Galactit). Ferner sollen auch Zucker umfaßt sein, wie Pentosen und Hexosen, z.B. Arabinose, Ribose, Xylose, Lyxose, Allose, Altrose, Glukose, Mannose, Idose, Galaktose, Talose, Fruktose und dergleichen. Vorzugsweise werden Polyole verwendet, die nach Abspaltung im System verbleiben können, wodurch ein zusätzlicher Entfernungsschritt entfallen kann. Bevorzugt sind höhermolekulare Systeme, insbesondere Polyole, die gleichzeitig auf ein Latexteilchen stabilisierend wirken, wie beispielsweise der als Schutzkolloid wirkende Polyvinylalkohol.

Gegenstand der Erfindung ist auch ein wäßriges System, enthaltend das oben beschriebene redispergierbare Material. Es kann sich hierbei um kolloiddisperse Systeme handeln, wobei eine Phase (disperse Phase) in der anderen (Dispersionsmittel) verteilt vorliegt. Je nach Verteilungsgrad unterscheidet man grobdisperse, kolloiddisperse und molekulardisperse Systeme. Es sollen hier molekulardisperse Systeme mitumfaßt sein, die als vollkommen klare Flüssigkeiten erscheinen, d.h. sogenannte echte Lösungen. Es hat sich gezeigt, daß unabhängig von der vorliegenden Form des latente Silanolgruppen enthaltenen Polymers - in Form eines redispergierbaren Pulvers, einer Dispersion oder Lösung - stabile Systeme erhalten werden, die vorübergehend desaktiviert sind. In einfacher Art und Weise und mit hohen Ausbeuten ist es dann möglich, unabhängig vom gewählten System, ein Abspalten der Schutzgruppe unter bestimmten Bedingungen, beispielsweise durch Säurehydrolyse, Hydrogenolyse, Photolyse oder ein anderes Verfahren, zu erreichen.

Die Erfindung bezieht sich ferner auf ein Verfahren zur Herstellung eines redispergierbaren Materials, wie es oben beschrieben wurde, durch Umsetzen eines silanolgruppenhaltigen Polymers mit einer Verbindung mit Schutzfunktion für die Silanolgruppen, gegebenenfalls mit anschließendem Gewinnen eines redispergierbaren pulvrigen Materials aus dem mit Schutzgruppen versehenen Polymer.

Grundsätzlich kann als Ausgangsmaterial für das erfindungsgemäße Verfahren ein beliebiges Polymer mit Silanolgruppen eingesetzt werden, wobei selbstverständlich auch kommerziell erhältliche Polymere verwendbar sind. Nach dem Verfahren der Erfindung werden die Silanolgruppen im Polymer durch Umsetzen mit einer Verbindung, die eine entsprechende Schutzfunktion für die Si-OH-Gruppe besitzt, geschützt. Nach einer bevorzugten Ausführungsform wird hierfür eine Verbindung mit mindestens einer Hydroxygruppe herangezogen, wobei bevorzugt die oben bezeichneten Polyole für diesen Zweck eingesetzt werden. Dem Fachmann sind derartige Umsetzungen sowie die einzuhaltenden Reaktionsbedingungen bekannt. Es können daher abhängig von der gewählten Hydroxyverbindung die Temperatur, die Menge und die weiteren Bedingungen für die Umsetzung in einfacher Art und Weise bestimmt und eingestellt werden.

Um das Verfahren der Erfindung technologisch zu veranschaulichen, wird nachfolgend die Reaktion einer Triolgruppe mit einem Silanolgruppen haltigen Polymer anhand der Reaktionsgleichung (4) gezeigt:

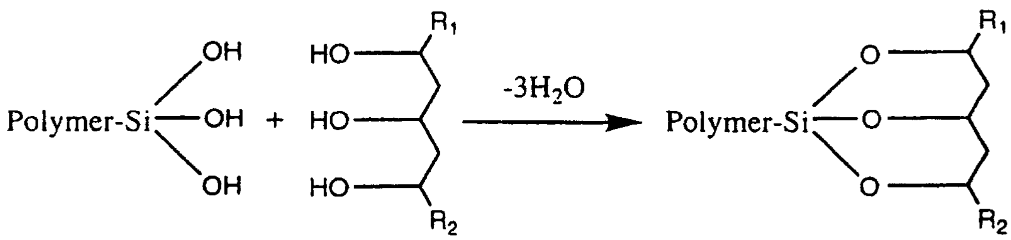


(4)

Durch Wasserabspaltung in bekannter Weise wird aus der Silanolgruppe und dem Glycerinderivat eine reversible Bindung ausgebildet, wobei man die entstehende Verbindung im weitesten Sinne auch als dreizähnigen Chelat-Komplex bezeichnen kann. Selbstverständlich muß es sich im vorliegenden Fall nicht notwendigerweise um ein Glycerinderivat handeln, worin $R_1$ und $R_2$ jeweils Alkylreste repräsentieren, sondern es kann sich bei dieser Verbindung um einen beliebige organische Verbindung mit drei Hydroxygruppen handeln, beispielsweise um einen Ausschnitt aus einem Polyvinylalkohol. Dieses Polymer mit latenten Silanolgruppen ist zunächst eine stabile Verbindung, bei der die ausgebildete Bindung jedoch in einfacher Art und Weise wieder gespalten werden kann. Dies geschieht wie nachfolgend in Reaktionsgleichung (5) dargestellt:

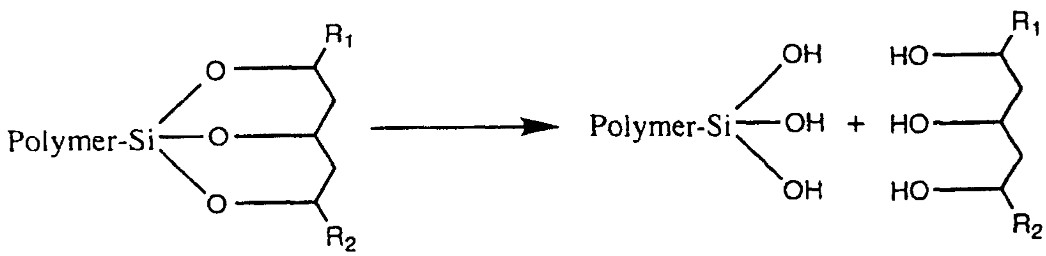

(5)

Die oben dargestellte Freisetzung der Silanolgruppen durch Abspaltung der Triolgruppe kann in üblicher Art und Weise durchgeführt werden. Dies kann beispielsweise durch entsprechende Änderung des pH-Werts, entweder durch Zugabe eines Feststoffs, wie einer festen Säure in Form von Zitronensäure oder Oxalsäure, bzw. einer festen Base, wie Calciumhydroxid, Natriumhydroxid oder Zement, oder aber durch entsprechende Matrix-Komponenten bei der Endanwendung erfolgen. Hierdurch können die reaktiven Gruppen gezielt freigesetzt werden, ohne daß sie zuvor durch unerwünschte Reaktionen bereits abreagieren und so irreversibel blockiert bleiben. Selbstverständlich müssen nicht alle in Polymer vorhandenen HO-Si-Gruppen mit einer Schutzgruppe geschützt werden. Es kann mit dem erfindungsgemäßen Verfahren auch eine partielle Blockierung erfolgen, so daß gezielt Silanolgruppen ohne Schutzgruppe im Polymer verbleiben. Bei einem Triol kann beispielsweise eine quantitative Umsetzung vorliegen, d.h. 100% HO-Si- pro HO-C-Gruppe wird geschützt. Bei einem Polyol, wie z.B. Polyvinylakohol, kann z.B. eine geeignete Umsetzung bis zu 50 % HO-Si- pro HO-C-Gruppe (Molverhältnis) erreicht werden.

Das erfindungsgemäß hergestellte Polymer mit den geschützten Silanolgruppen kann in Form einer wäßrigen Dispersion oder Lösung verwendet werden. Auch kann durch Entfernen des Wassers in üblicher Weise durch Trocknen, insbesondere durch Sprühoder Gefriertrocknen, ein redispergierbares Pulver erhalten werden. Ein besonders günstiges Verfahren zum Trocknen der wäßrigen Dispersion ist das Verfahren der Sprühtrocknung, womit größere Pulvermengen erzeugt werden können. Hiernach wird die wäßrige Dispersion in einem Warmluftstrom versprüht und entwässert, wobei vorzugsweise Trockenluft und die versprühte wäßrige Dispersion im Gleichstrom durch den Trockner geführt werden und bei Bedarf bekannte Trockenhilfsmittel mitverwendet werden können. Das redispergierbare Pulver kann als pulverförmige Fertigmischung verwendet werden, die nur noch mit Wasser angerührt werden muß. Es kann je nach dem gewünschten Anwendungszweck in mehr oder weniger konzentrierter Form in Wasser redispergiert werden. Anschließend kann, wie bereits beschrieben, eine gezielte Freisetzung der Silanolgruppen im redispergierten Pulver erfolgen.

Das erfindungsgemäße redispergierbare Material kann in Form eines redispergierbaren Pulvers, einer wäßrigen Dispersion oder Lösung vielseitig Verwendung finden. So eignet es sich zur Verwendung in Verbund- und Beschichtungsmörteln, Zementfarben und Klebstoffen, in kunststoffhaltigen zementgebundenen Systemen, insbesondere in Mörtel, und kunststoffgebundenen zementfreien Bindemitteln, insbesondere in zementfreien Mörteln, Gipsmörteln, Grundierungen, Putzen, Teppich-, Holz-, Pulver- und Bodenklebstoffen sowie in Tapetenkleister, Dispersionsfarben und Glasfaserverbundsystemen.

Die mit der Erfindung verbundenen Vorteile sind sehr vielfältig. Die Erfindung ermöglicht es, ein redispergierbares Material bereitzustellen, das vorübergehend desaktivierte Silanolgruppen aufweist, die gezielt aktiviert werden können. Dies gilt nicht nur für wäßrige Systeme, sondern auch für die aus dem Material herstellbaren redispergierbaren Pulver. Somit können sehr hohe Gehalte reaktiver Silanolgruppen zur Verfügung gestellt werden, die generell zu verbesserten Eigenschaften der Endprodukte führen, da in hohem Maße vernetzte Systeme erhalten werden können, die eine wesentlich verbesserte Adhäsion, zeigen. Ferner besitzen die erfindungsgemäßen Materialien bezüglich der quantitativen und qualitativen Rahmenbedingungen gegenüber den eingangs geschilderten Lehren des Standes der Technik eine überraschende Flexibilität. Durch Vorsehen geschützter Silanolgruppen kann eine verzögerte Umsetzung bzw. Vernetzung während der Endanwendung erreicht werden, wodurch die Handhabbarkeit und Verarbeitbarkeit zusätzlich verbessert werden. In vorteilhafter Weise können auch Polymere mit sehr hohem Gehalt an Silanolgruppen zur Verfügung gestellt werden, wodurch die erwünschten Eigenschaften mit steigenden Konzentrationen der vorhandenen Silanolgruppen um so mehr in Erscheinung treten. Derartig hohe Silanol-Konzentrationen sind bislang bei den bekannten Polymeren nicht möglich. Ferner kann auch das Polymer mit latenten Silanolgruppen direkt eingesetzt werden, wobei bei Anwendung sehr geringer Teilchengrößen diese direkt als Primer verwendbar sind. Das erfindungsgemäße redispergierbare Material zeigt zudem sehr günstige Eigenschaften, wie verbesserte Verarbeitbarkeit, bessere Adhäsion, höhere Flexibilität, gute Wasserbeständigkeit und höhere Lagerstabilität. Darüber hinaus liegt ein Vorteil des redispergierbaren Materials darin, daß in den angesprochenen Endanwendungen generell verbesserte Eigenschaften auftreten.

Nachfolgend wird die Erfindung anhand von Beispielen, welche die erfindungsgemäße Lehre nicht beschränken sollen, im einzelnen beschrieben. Dem Fachmann sind im Rahmen der erfindungsgemäßen Offenbarung weitere Ausführungsbeispiele offensichtlich.

## Beispiele

### Beispiel 1

In einen 2 Liter Glasreaktor, ausgerüstet mit einem Rührer und einer Temperaturregelung, wurden 61 g Polyvinylalkohol (PVA) mit einem Hydrolysegrad von 88% und einer Viskosität von 5,7 mPas (als 4%ige wäßrige Lösung), gelöst in 791 g Wasser, sowie 7,5 g Natriumbicarbonat gegeben. Diese Lösung wurde auf 70°C thermostatisiert. Anschließend wurde eine erste Monomermischung, bestehend aus 38,2 g Butylacrylat, 38,2 g Styrol und 3,05 g gamma-Methacryloxypropyltrimethoxysilan (Silane A-174 der Firma Witco Corp.), und fünf Minuten später 7,5 g Tertiärbutylhydroperoxid (70%ig in Wasser) zugegeben. Anschließend wurden während 6 Stunden 4,5 g Natriumformaldehydsulfoxylat (Rongalit C der Firma BASF), als 10%ige wäßrige Lösung, in den Reaktor zudosiert. Nach einer halben Stunde wurden 687,4 g einer zweiten Monomermischung, bestehend aus 343,7 g Butylacrylat und 343,7 g Styrol, kontinuierlich während 4,5 Stunden zudosiert. Am Ende der Monomerdosierung wurden 2,1 g Tertiärbutylhydroperoxid zur Reaktionsmischung gegeben. Nach einer gesamten Reaktionszeit von 7 Stunden wurde die entstandene Dispersion abgekühlt und analysiert. Der Festkörper betrug 49,2%, der pH-Wert 8,1 und die Viskosität 2.820 mPas (nach Epprecht, Becher D und Stufe 13).

### Beispiel 2

Beispiel 1 wurde wiederholt, wobei in den Glasreaktor 53,7 g PVA, gelöst in 695 g Wasser, 6,6 g Natriumbicarbonat und 3,85 g eines Tensidgemisches (nichtionisch/anionisch, ca. 45%ig in Wasser) zugegeben wurden. Die erste Monomermischung, bestehend aus 32,15 g Butylacrylat, 32,15 g Styrol, 8,1 g gamma-Methacryloxypropyltrimethoxysilan und 0,15 g Acrylsäure, wurde während einer Stunde kontinuierlich zudosiert. Nach Zulaufende wurden 6,6 g Tertiärbutylhydroperoxid hinzugegeben, gefolgt von einem 4,75 stündigen Zulauf von 4,0 g Natriumformaldehydsulfoxylat als 10%ige wäßrige Lösung. Eine halbe Stunde später wurde die zweite Monomermischung, bestehend aus 302,0 g Butylacrylat, 302,0 g Styrol, als kontinuierlicher Zulauf während 3 Stunden gestartet. Nach Ablauf des zweiten Monomerzulaufes wurden 1,8 g Tertiärbutylhydroperoxid hinzugegeben und die Temperatur wurde auf 85°C erhöht. Nach einer gesamten Reaktionszeit von 6,5 Stunden wurde die entstandene Dispersion abgekühlt und analysiert. Der Festkörper betrug 49,7 % , der pH-Wert 7,5 und die Viskosität 2.400 mPas (nach Epprecht, Becher C und Stufe 13).

### Beispiel 3

Beispiel 2 wurde wiederholt, wobei der erste Monomerzulauf aus 33,3 g Butylacrylat, 33,3 g Styrol, 5,4 g gamma-Methacryloxypropyltrimethoxysilan und 0,15 g Acrylsäure bestand. Der Festkörper betrug 50,0%, der pH-Wert 7,4 und die Viskosität 1.730 mPas (nach Epprecht, Becher C und Stufe 13).

**Beispiel 4**

Beispiel 2 wurde wiederholt, wobei der erste Monomerzulauf aus 34,35 g Butylacrylat, 34,35 g Styrol, 2,7 g gamma-Methacryloxypropyltrimethoxysilan und 0,15 g Acrylsäure bestand. Der Festkörper betrug 49,6%, der pH-Wert 7,4 und die Viskosität 1.740 mPas (nach Epprecht, Becher C und Stufe 13).

**Beispiel 5**

Beispiel 2 wurde wiederholt, wobei in den Glasreaktor 44,5 g PVA mit einem Hydrolysegrad von 98,4% und einer Viskosität von 3,7 mPas (als 4%ige wäßrige Lösung), gelöst in 550 g Wasser und 5,6 g Natriumbicarbonat zugegeben wurden. Diese Lösung wurde auf 80°C thermostatisiert. Die erste Monomermischung, bestehend aus 20,0 g Butylacrylat, 19,9 g Styrol, 15,6 g gamma-Methacryloxypropyltrimethoxysilan und 0,11 g Acrylsäure, wurde während einer Stunde kontinuierlich zudosiert. Nach Zulaufende wurden 11,1 g Tertiärbutylhydroperoxid hinzugegeben, gefolgt von einem 5,75 stündigen Zulauf von 6,5 g Natriumformaldehydsulfoxylat als 10%ige wäßrige Lösung. Eine Stunde später wurde die zweite Monomermischung, bestehend aus 247,7 g Butylacrylat und 247,7 g Styrol, als kontinuierlicher Zulauf während 4 Stunden gestartet. Nach Ablauf des zweiten Monomerzulaufes wurden 3,0 g Tertiärbutylhydroperoxid hinzugegeben und die Temperatur wurde auf 90°C erhöht. Nach einer gesamten Reaktionszeit von 7,25 Stunden wurde die entstandene Dispersion abgekühlt und analysiert. Der Festkörper betrug 47,7%, der pH-Wert 7,4 und die Viskosität 740 mPas (nach Epprecht, Becher C und Stufe 13).

**Beispiel 6**

Beispiel 2 wurde wiederholt, wobei in den Glasreaktor 44,2 g PVA mit einem Hydrolysegrad von 98,4% und einer Viskosität von 3,7 mPas (als 4%ige wäßrige Lösung), gelöst in 551 g Wasser, gegeben wurden. Diese Lösung wurde auf 75°C thermostatisiert. Die erste Monomermischung, bestehend aus 46,4 g Vinylacetat und 8,8 g Vinyltrimethoxysilan (der Firma Fluka), wurde während einer Stunde kontinuierlich zudosiert. Nach Zulaufende wurden 15,5 g Tertiärbutylhydroperoxid hinzugegeben, gefolgt von einem 4,5 stündigen Zulauf von 6,8 g Natriumformaldehydsulfoxylat als 10%ige wäßrige Lösung. Nach einer halben Stunde wurde die Temperatur auf 80°C erhöht. Nach einer weiteren halben Stunde wurde die zweite Monomermischung, bestehend aus 110,4 g Butylacrylat und 386,9 g Vinylacetat, als kontinuierlicher Zulauf während 3 Stunden gestartet. Nach Ablauf des zweiten Monomerzulaufes wurden 4,0 g Tertiärbutylhydroperoxid hinzugegeben und die Temperatur wurde auf 90°C erhöht. Nach einer gesamten Reaktionszeit von 6,25 Stunden wurde die entstandene Dispersion abgekühlt und analysiert. Der Festkörper betrug 48,9%, der pH-Wert 2,4 und die Viskosität 1020 mPas (nach Epprecht, Becher C und Stufe 13).

**Beispiel 7** (Vergleichsbeispiel 1)

Beispiel 2 wurde wiederholt, wobei der erste Monomerzulauf nur aus 36,2 g Butylacrylat, 36,2 g Styrol und 0,15 g Acrylsäure bestand. Der Festkörper betrug 50,0%, der pH-Wert 7,4 und die Viskosität 2.010 mPas (nach Epprecht, Becher C und Stufe 13).

**Beispiel 8** (Anwendungsbeispiel 1)

Die Beispiele 2, 3, 4 und 7 wurden auf übliche Weise zu einem redispergierbaren Pulver sprühgetrocknet. Die erhaltenen Dispersionspulver wurden zu je 8,5 Teilen mit Quarzsand 0,1 - 0,3 mm (57,7 Teile), Portlandzement CEM I 52,5 (30,7 Teile), Calciumhydroxid (2,8 Teile) und modifizierte Methylhydroxyethylcellulose mit einer Viskosität von 6000 mPas (als 2%ige wäßrige Lösung; 0,4 Teile) vermischt und mit Wasser (21 Teile) angerührt. Der erhaltene Mörtel wurde auf eine Betonplatte appliziert und anschließend Steinzeugfließen (5x5 cm) ins Mörtelbett eingelegt. Dabei wurde darauf geachtet, daß die Fliesen 10 mm über die Längskante der Betonplatte vorsteht um Scherhaftfestigkeiten zu messen. Nach 14 Tagen bei Normklima (23°C und 50% rel. Luftfeuchtigkeit) bzw. 7 Tagen bei Normklima und 7 Tagen Lagerung in Wasser wurden die Scherhaftfestigkeiten in Anlehnung an DIN 53 265 gemessen. Die erhaltenen Werte (Tabelle 1) zeigen deutlich, daß bei Erhöhung des Silangehaltes sowohl die Höchstkraft, als auch die Verformung zunimmt.

Tabelle 1:

| Scherhaftzugfestigkeiten (Höchstkraft und Verformung) nach Trocken- und Naßlagerung | | | | | |
|---|---|---|---|---|---|
| Disp. Pulver erhalten aus | Silangehalt (%) auf 100T Monomer | Höchstkraft trocken | Verformung trocken | Höchstkraft naß | Verformung naß |
| Bsp. 2 | 1,2 | 6,2 kN | 0,30 mm | 1,22 kN | 0,11 mm |
| Bsp. 3 | 0,8 | 4,5 kN | 0,23 mm | 0,64 kN | 0,06 mm |
| Bsp. 4 | 0,4 | 5,2 kN | 0,23 mm | 0,67 kN | 0,07 mm |
| Bsp. 7 | 0,0 | 2,3 kN | 0,20 mm | 0,27 kN | 0,05 mm |

**Beispiel 9** (1:1 Verhältnis)

172,5 g eines kommerziellen wasserdispergierten Polymers mit aktiven Silanolgruppen mit einem Feststoffanteil von 29,0% (Kanebinol KD-20 der Firma Nippon-NSC) wurden mit 250,0 g Polyvinylalkohol (PVA; als 20,0% ige wäßrige Lösung) mit einem Hydrolysegrad von 88% und einer Viskosität von 5,7 mPas (als 4%ige wäßrige Lösung), vermischt und während 5 Minuten leicht gerührt. Das Polymergemisch wurde auf übliche Weise zu einem redispergierbaren Pulver sprühgetrocknet. Es resultierte ein weißes, rieselfähiges Pulver, welches in Wasser redispergiert. Die Sprühtrocknung wie auch die nachfolgende Redispergierung sind vergleichbar mit kommerziellen Dispersionspulvern.

**Beispiel 10** (2:1 Verhältnis)

Das Beispiel 9 wurde wiederholt, wobei 230,0 g des kommerziellen wasserdispergierten Polymers mit aktiven Silanolgruppen mit einem Feststoffanteil von 29,0% (Kanebinol KD-20 der Firma Nippon-NSC) mit 166,5 g Polyvinylalkohol (PVA; als 20,0% ige wäßrige Lösung) vermischt und während 5 Minuten leicht gerührt wurde. Das Polymergemisch wurde auf übliche Weise zu einem redispergierbaren Pulver sprühgetrocknet. Es resultierte ein weißes, rieselfähiges Pulver, welches in Wasser redispergiert. Die Sprühtrocknung wie auch die nachfolgende Redispergierung sind vergleichbar mit kommerziellen Dispersionspulvern.

**Beispiel 11**

3,45 g eines kommerziellen wasserdispergierten Polymers mit aktiven Silanolgruppen mit einem Feststoffanteil von 29,0 % (Kanebinol KD-20 der Firma Nippon-NSC) wurden mit 5,0 g Polyvinylalkohol (PVA; als 20,0 % ige wäßrige Lösung) mit einem Hydrolysegrad von 88% und einer Viskosität von 5,7 mPas (als 4%ige wäßrige Lösung), vermischt und während 5 Minuten leicht gerührt. Das Polymergemisch (trübe Lösung) wurde gefriergetrocknet. Das daraus resultierende Material wurde mit Wasser vermischt und leicht gerührt. Sofort wurde das Wasser wieder trüb, was auf eine Redispergierung des Materials schließen läßt. Analog wurde mit dem ungeschützten wasserdispergierten Polymer verfahren, wobei keine Schutzgruppe (z.B. Polyvinylalkohol) zugegeben wurde. Das gefriergetrocknete Material wurde ebenfalls mit Wasser vermischt und leicht gerührt. Das Wasser blieb jedoch klar, auch nach starkem Rühren und längerer Zeit im Wasser. Daraus kann geschlossen werden, daß das Material während oder nach dem Gefriertrocknen vernetzte und ein hochmolekulares, wasserunlösliches Polymer bildete.

**Beispiel 12**

Beispiel 9 wurde wiederholt, wobei 17,25 g eines kommerziellen wasserdispergierten Polymers mit aktiven Silanolgruppen mit einem Feststoffanteil von 29,0% (Kanebinol KD-20 der Firma Nippon-NSC) wurden mit 25,0 g Polyvinylalkohol (PVA; als 20,0% ige wäßrige Lösung) vermischt und während 5 Minuten leicht gerührt. Anschließend wurden 90,0 g (bezogen auf den Feststoffanteil) einer für die Dispersionspulverherstellung üblicherweise verwendeten Dispersion (Basis Ethylen-Vinylacetat) hinzugegeben, und mit Wasser einen Feststoffanteil von 25% eingestellt. Anschließend wurde nochmals 5 Minuten leicht gerührt. Das Polymergemisch wurde auf übliche Weise zu einem redispergierbaren Pulver sprühgetrocknet. Es resultierte ein weißes, rieselfähiges Pulver, welches in Wasser redispergiert. Die Sprühtrocknung wie auch die nachfolgende Redispergierung sind vergleichbar mit kommerziellen Dispersionspulvern.

**Beispiel 13**

Beispiel 12 wurde wiederholt, wobei nur 45,0 g Polyvinylalkohol und 91,0 g Dispersion (bezogen auf den Feststoffanteil) vermischt und mit Wasser auf einen Feststoffanteil von 25% verdünnt wurde. Nach einer Rührzeit von 5 Minuten wurde das Polymergemisch auf übliche Weise zu einem redispergierbaren Pulver sprühgetrocknet. Es resultierte ein weißes, rieselfähiges Pulver, welches in Wasser redispergiert.

**Beispiel 14** (Anwendungsbeispiel 2)

Die Beispiele 9, 10, 12 und 13 wurden zu je 5 Teilen mit Quarzsand 0,1 - 0,3 mm (38,8 Teile), Portlandzement CEM I 52,5 (33,8 Teile), Calciumcarbonat (21,7 Teile); Cellulosefaser (0,5 Teile) und Methylhydroxyethylcellulose mit einer Viskosität von 2000 mPas (als 2%ige wäßrige Lösung; 0,5 Teile) vermischt und mit Wasser (20 - 21 Teile) angerührt. Der erhaltene Mörtel wurde auf eine Betonplatte appliziert und anschließend Steinzeugfließen (5x5 cm) ins Mörtelbett eingelegt. Nach 28 Tagen bei Normklima (23°C und 50% rel. Luftfeuchtigkeit) bzw. 7 Tagen bei Normklima und 21 Tagen Lagerung in Wasser wurden die Haftzugfestigkeiten in Anlehnung an prEN 1348 (Okt. 1993) gemessen. Die erhaltenen Werte (Tabelle 2) zeigen deutlich, daß mit dem System Silan/ PVOH gegenüber den anderen Systemen verbesserte Haftzugfestigkeiten erzielt werden.

Tabelle 2:

| Haftzugfestigkeiten nach Trocken- und Naßlagerung | | |
|---|---|---|
| Disp. Pulver | trocken | naß |
| Bsp. 9 | 1,00 $N/mm^2$ | 0,51 $N/mm^2$ |
| Bsp. 12 | 1,40 $N/mm^2$ | 0,35 $N/mm^2$ |
| Bsp. 13 | 1,07 $N/mm^2$ | 0,28 $N/mm^2$ |
| KD20 | 0,16 $N/mm^2$ | 0,04 $N/mm^2$ |

## Patentansprüche

1. In Wasser redispergierbares Polymer, insbesondere in Pulverform, das ein Silanolgruppen-haltiges Polymer umfasst, **dadurch gekennzeichnet, dass** 50 bis 100 % der Silanolgruppen mit einer Schutzgruppe versehen sind und die Schutzgruppe eine hydroxygruppenhaltige Verbindung in Form eines Polyols darstellt, die unter alkalischen Bedingungen abspaltbar ist.

2. Redispergierbares Material nach Anspruch 1, **dadurch gekennzeichnet, dass** das Polyol ein mehrwertiger Alkohol in Form von Trimethylolpropan, Glykol, Diethylenglykol, Butantriol, Pentantriol, Hexantriol und/oder Pentaerythritol oder ein Polymer mit mehr als zwei Hydroxygruppen, insbesondere Polyvinylalkohol, ist.

3. Wässriges System, enthaltend das redispergierbare Material nach Anspruch 1 oder 2.

4. Verfahren zur Herstellung eines redispergierbaren Materials nach Anspruch 1 oder 2 durch Umsetzen eines silanolgruppenhaltigen Polymers mit einer Verbindung mit Schutzfunktion für die Silanolgruppen, wobei die Schutzgruppe auf eine hydroxygruppenhaltige Verbindung in Form eines Polyols zurückgeht, und Gewinnen eines redispergierbaren pulverigen Materials aus dem mit Schutzgruppen versehenen Polymer.

5. Verfahren nach Anspruch 4, **dadurch gekennzeichnet, dass** das Polyol Trimethylolpropan, Glykol, Diethylenglykol, Butantriol, Pentantriol, Hexantriol und/oder Pentaerythritol oder ein Polymer mit mehr als zwei Hydroxygruppen, insbesondere Polyvinylalkohol, ist.

6. Verfahren nach Anspruch 4 oder 5, **dadurch gekennzeichnet, dass** das redispergierbare pulverige Material durch Trocknen, insbesondere durch Sprüh- oder Gefriertrocknen, gewonnen wird.

7. Verwendung des redispergierbaren Materials nach Anspruch 1 oder 2 bzw. des wässrigen Systems nach Anspruch 3 in Verbund- und Beschichtungsmörtel, Zementfarben und Klebstoffen, kunststoffhaltigen zementgebundenen Systemen, insbesondere Mörtel, und kunststoffgebundenen zementfreien Bindemitteln, insbesondere in zementfreien Mörteln, Gipsmörteln, Grundierungen, Putzen, Teppich-, Holz-, Pulverund Bodenklebstoffen sowie in Tapetenkleister, Dispersionsfarben und Glasfaserverbundsystemen.

## Claims

1. Polymer, particularly in powder form, which is redispersible in water and comprises a polymer containing silanol groups, **characterised in that** 50 to 100% of the silanol groups are provided with a protective group and the protective group constitutes a compound containing hydroxyl groups which is in the form of a polyol and can be split off under alkaline conditions.

2. Redispersible material as claimed in Claim 1, **characterised in that** the polyol is a polyvalent alcohol in the form of trimethylol propane, glycol, diethylene glycol, butane triol, pentane triol, hexane triol and/or pentaerythritol or a polymer with more than two hydroxyl groups, in particular polyvinyl alcohol.

3. Aqueous system containing the redispersible material as claimed in Claim 1 or 2.

4. Method of production of a redispersible material as claimed in Claim 1 or 2 by conversion of a polymer containing silanol groups with a compound with a protective function for the silanol groups, wherein the protective group is attributable to a compound containing hydroxyl groups in the form of a polyol, and obtaining a redispersible pulverulent material from the polymer provided with protective groups.

5. Method as claimed in Claim 4, **characterised in that** the polyol is a polyvalent alcohol in the form of trimethylol propane, glycol, diethylene glycol, butane triol, pentane triol, hexane triol and/or pentaerythritol or a polymer with more than two hydroxyl groups, in particular polyvinyl alcohol.

6. Method as claimed in Claim 4 or 5, **characterised in that** the redispersible pulverulent material is obtained by drying, particularly by spray-drying or freeze-drying.

7. Use of the redispersible material as claimed in Claim 1 or 2 or of the aqueous system as claimed in Claim 3 in composite and coating mortars, cement dyes and adhesives, cement-bound systems containing plastic, particularly mortars, and plastic-bound cement-free binders, particularly in cement-free mortars, gypsum mortars, primers, plasters, carpet adhesives, wood adhesives, powder adhesives and floor adhesives and also in wallpaper pastes, disperse dyes and glass fibre composite systems.

## Revendications

1. Polymère redispersable dans l'eau, en particulier sous forme de poudre, qui comprend un polymère porteur de groupes silanol, **caractérisé en ce que** 50 à 100 % des groupes silanol comportent un groupe protecteur, et le groupe protecteur représente un composé porteur de groupes hydroxy sous forme d'un polyol, qui peut être éliminé dans des conditions alcalines.

2. Matière redispersable suivant la revendication 1, **caractérisée en ce que** le polyol est un alcool polyvalent sous forme de triméthylolpropane, de glycol, de diéthylèneglycol, de butanetriol, de pentanetriol, d'hexanetriol et/ou de pentaérythritol ou un polymère portant plus de deux groupes hydroxy, en particulier un polymère d'alcool vinylique.

3. Système aqueux, contenant la matière redispersable suivant la revendication 1 ou 2.

4. Procédé de production d'une matière redispersable suivant la revendication 1 ou 2, par réaction d'un polymère porteur de groupes silanol avec un composé ayant une fonction de protection pour les groupes silanol, le groupe protecteur revenant à un composé porteur de groupes hydroxy sous forme d'un polyol, et obtention d'une matière en poudre redispersable à partir du polymère pourvu de groupes protecteurs.

5. Procédé suivant la revendication 4, **caractérisé en ce que** le polyol est le triméthylolpropane, le glycol, le diéthylèneglycol, le butanetriol, le pentanetriol, l'hexanetriol et/ou le pentaérythritol ou un polymère portant plus de deux groupes hydroxy, en particulier un polymère d'alcool vinylique.

6. Procédé suivant la revendication 4 ou 5, **caractérisé en ce que** la matière en poudre redispersable est obtenue par séchage, en particulier par atomisation ou par lyophilisation.

7. Utilisation de la matière redispersable suivant la revendication 1 ou 2, ou du système aqueux suivant la revendication 3, dans un mortier d'assemblage et de revêtement, des couleurs pour ciment et des adhésifs, des systèmes liés par un ciment contenant une matière plastique, en particulier des mortiers, et des colles sans ciment à liaison par matière plastique, en particulier dans des mortiers sans ciment, des mortiers de plâtre, des apprêts, des enduits, des adhésifs pour tapis, bois, poudres et sols ainsi que des colles pour papiers peints, des couleurs dispersées et des systèmes composites contenant des fibres de verre.